(19) Europäisches Patentamt
European Patent Office
Office européen des brevets

(11) **EP 2 679 539 A1**

(12) **EUROPEAN PATENT APPLICATION**
published in accordance with Art. 153(4) EPC

(43) Date of publication:
**01.01.2014 Bulletin 2014/01**

(21) Application number: **12750235.9**

(22) Date of filing: **21.02.2012**

(51) Int Cl.:
**C01B 31/02** (2006.01)     **B82Y 30/00** (2011.01)
**B82Y 40/00** (2011.01)

(86) International application number:
**PCT/JP2012/054043**

(87) International publication number:
**WO 2012/115073 (30.08.2012 Gazette 2012/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2011 JP 2011034676**

(71) Applicant: **Toyo Tanso Co., Ltd.
Osaka-shi
Osaka 555-0011 (JP)**

(72) Inventor: **ORIKASA, Hironori
Osaka-shi
Osaka 555-0011 (JP)**

(74) Representative: **Glawe, Delfs, Moll
Partnerschaft mbB von
Patent- und Rechtsanwälten
Postfach 26 01 62
80058 München (DE)**

(54) **METAL-CARBON COMPOSITE MATERIAL AND METHOD FOR PRODUCING SAME**

(57)     Provided are a metal-carbon composite material which can have improved productivity, has sufficient performance, can be used in a wide range of fields, and can have a reduced burden on the environment; and a method for manufacturing the same.
    The metal-carbon composite material includes: carbon; and nanoparticles formed of a metal or a metal oxide, wherein the ratio of the nanoparticles is 50% by weight or more and 99% by weight or less based on the total amount of the carbon and the nanoparticles, the metal-carbon composite material having a structure in which nanoparticles are dispersed in carbon.

FIG. 1

**Description**

TECHNICAL FIELD

The present invention relates to a metal-carbon composite material and a method for manufacturing the same. Particularly, the invention relates to a carbon composite material containing magnetic metallic nanoparticles and a method for manufacturing the same.

BACKGROUND ART

It is known that when metallic particles are nano-dispersed (in a size of about 1 to 100 nm), a change such as a change in an electronic structure or an increase in a surface area occurs due to a size effect, and resultantly various advantages are provided such as a high electromagnetic wave absorbing effect, a change in coercive force in a magnetic material, application to pigments and sensors owing to exhibition of a surface plasmon effect, and an improvement in catalytic activity. For nano-dispersing the metallic particles, dispersion with a surfactant, a gas phase method using a plasma, a liquid phase method in a dilute solution, or a method using a super critical fluid has been so far used, but these methods have problems of difficult control, low productivity and so on. One of the most suitable materials for solving those problems is a metal-carbon composite material with a carbon material interposed between fine particles.

Here, for the conventional metal-carbon composite material in which metallic particles are nano-dispersed, a method of manufacturing such a material by a manufacturing method such as a liquid phase method or an arc discharge method has been proposed.

For example, a metal-carbon composite material formed by carbonizing a citric acid complex polymer obtained by adding citric acid and water or ethylene glycol to a metal salt such as $Fe(NO_3)_3 \cdot 9H_2O$, $Co(NO_3) \cdot 6H_2O$ has been disclosed (see Non-Patent Documents 1 and 2 described below).

A manufacturing method has been disclosed in which a carbon material containing Ni and Fe is provided as an electrode, and arc-discharged with a counter electrode to obtain a metal-carbon composite material with metallic fine particles nano-dispersed in a carbon material (see Non-Patent Documents 3 and 4 described below).

CITATION LIST

[NON-PATENT DOCUMENTS]

[Non-Patent Document 1] J. Jpn. Soc. Powder Powder Metallurgy Vol. 52, No.8, "Preparation of Carbon/Fe-Co Alloy Composite Material Applying Complex Polymerization Method and Magnetic Properties"
[Non-Patent Document 2] Carbon No. 228, "Preparation of Carbon/Fe-Ni-Cu Alloy Composite by Polymerized Complex Method and Characterization of their Structure and Electromagnetic Wave Absorption"
[Non-Patent Document 3] Appl. Phys. Lett. 89, 053115 (2006) "Microwave absorption properties of the carbon-coated nickel nanocapsules"
[Non-Patent Document 4] J. Phys. D: Appl. Phys. 40 (2007) 5383-5387, "Microstructure and microwave absorption properties of the carbon-coated Iron nanocapsules"

SUMMARY OF THE INVENTION

PROBLEMS TO BE SOLVED BY THE INVENTION

However, when a metal-carbon composite material is prepared using a conventional liquid phase method as in Patent Documents 1 and 2 described above, there is the problem that the amount of a metal in the metal-carbon composite material cannot be increased although nano-dispersion of the metal can be performed. Specifically, the content of a metal in the metal-carbon composite material disclosed in Non-Patent Document 1 is at most 27% by weight, and the content of a metal in the metal-carbon composite material disclosed in Non-Patent Document 2 is at most 42.7% by weight.

The amount of a metal in a metal-carbon composite material obtained by an arc discharge method as in Non-Patent Documents 3 and 4 is not disclosed. However, in the above-mentioned method, the possibility that the metal content reaches 50% by weight may be extremely low when considering a metal component that is vaporized by heat during arc discharge.

A metal-carbon composite material having a low metal content as described above does not sufficiently exhibit an advantage resulting from inclusion of a metal. Therefore, there is the problem of lacking adaptability in the various fields described above, and lacking an electromagnetic wave absorbing capability particularly when the metal-carbon composite material is applied in the field of electromagnetic wave absorbing materials.

In addition, when the conventional liquid phase method is used, there is also the problem of increasing a burden on the environment because a polymerizable organic solvent (generally ethylene glycol) is used as a solvent.

The present invention takes into consideration the problems of the prior arts described above, and an object thereof is to provide a metal-carbon composite material which has dramatically improved performance while having improved productivity and which can be used in a wide range of fields and can have a reduced burden on the environment; and a method for manufacturing the same.

MEANS FOR SOLVING THE PROBLEMS

For achieving the above-described object, the present invention provides a metal-carbon composite material including: carbon; and nanoparticles formed of a metal and/or a metal oxide, wherein the ratio of the nanoparticles is 50% by weight or more and 99% by weight or less based on the total amount of the carbon and the nanoparticles.

If it can be ensured that the ratio of the metal is 50% by weight or more as in the above-described configuration, productivity of metallic nanoparticles can be improved, sufficient performance can be exhibited in a field where the metal-carbon composite material is used, and the metal-carbon composite material can be used in a wide range of fields.

It is to be noted that crystallinity of carbon does not matter in the metal-carbon composite material. In other words, carbon in the metal-carbon composite material may be crystalline or amorphous. The metal described above includes an alloy.

It is desirable that the nanoparticles be dispersed in the carbon.

When the metal-carbon composite material has a structure in which nanoparticles are dispersed in carbon (i.e. coagulation of nanoparticles can be suppressed), properties specific to nanoparticles are maintained, and therefore higher performance can be exhibited in a field where the metal-carbon composite material is used. In addition, even though the metal-carbon composite material has a structure in which nanoparticles are dispersed, nanoparticles excellent in oxidation resistance, heat resistance and chemical resistance can be obtained because carbon exists around nanoparticles. Accordingly, the product life of the metal-carbon composite material is increased, and the handling characteristics of the metal-carbon composite material are dramatically improved.

It is desirable that the average particle diameter of the nanoparticles be 1 nm or more and 100 nm or less.

This is because the problem arises that stability is significantly deteriorated if the average particle diameter of the nanoparticles is less than 1 nm, while the problem arises that a function as nanoparticles is not exhibited if the average particle diameter of the nanoparticles is more than 100 nm.

It is desirable that the standard deviation of the particle diameters of the nanoparticles be not more than 1/3 of the average particle diameter of the nanoparticles.

When the particle diameters of the nanoparticles are equalized as described above, the above-described effect is further exhibited.

It is desirable that the nanoparticles be formed of an alloy, and particularly it is desirable that the alloy include at least two metals selected from the group consisting of iron, nickel, manganese, cobalt, chromium, copper, vanadium, molybdenum, silicon, aluminum, zinc, tin, tungsten, gold, silver and platinum.

When the nanoparticles are formed of various kinds of alloys as described above, the metal-carbon composite material can be used in a variety of fields such as the field of electromagnetic wave absorbers.

It is desirable that the coercive force be 20 A/m or less.

When the metal carbon composite material has the configuration described above, a high effect can be sufficiently exhibited as an electromagnetic wave absorber.

For achieving the above-described object, the present invention includes: a first step of dissolving a metal source and a carbon source in a protic solvent; a second step of removing the protic solvent; and a third step of performing firing under a reducing atmosphere or an inert atmosphere.

By the above-described method, a metal-carbon composite material having a high ratio of the nanoparticles can be obtained. The above-described method is very simple and easy as compared to conventional methods for manufacturing nanoparticles as it suffices that there is equipment which copes with dissolution in the first step, drying in the second step and firing in the third step, and conditions that should be controlled are only the temperature and atmosphere during firing. Therefore, productivity of nanoparticles is dramatically improved.

In addition, since the metal-carbon composite material can be manufactured without using a polymerizable organic solvent, a burden on the environment can be reduced. Further, since the metal content of the metal-carbon composite material can be arbitrarily adjusted merely by adjusting the amount of the metal source and the carbon source, a variety of requests can be instantly met.

Since the amount of carbon in the metal-carbon composite material can be controlled merely by adjusting the added amount of the carbon source in the first step (rather than controlling the carbon yield according to firing conditions in the firing step), the amount of carbon can be simply and easily controlled. Moreover, by controlling the amount of carbon as described above, the particle diameters of nanoparticles can be resultantly controlled. Specifically, if the firing temperature in the third step becomes high, the crystallite diameter may be increased, but a significant increase in crystallite diameter can be suppressed by performing control so that the ratio of carbon is increased to a certain extent.

In addition, since the metal source is dissolved in water, materials are homogeneously mixed when two or more metal sources are used. Therefore, such a trouble can be avoided that when an alloy is used as nanoparticles, some are in the form of the alloy, but others remain in the form of a metal as described later.

It is desirable that the drying temperature in the second step be 70°C or higher and less than 150°C. The drying time is increased if the drying temperature is less than 70°C, while the ratio of carbon may become considerably lower than a desired level if the drying temperature is not less than 150°C.

It is desirable that the metal source include a plurality of different metals.

When two or more metal sources are dissolved in a protic solvent, metals can be formed into an alloy. Therefore, a metal-carbon composite material with alloyed nanoparticles dispersed in carbon can be easily prepared.

It is desirable that a metal salt of an organic acid be used as the metal source and carbon source.

When for example nickel citrate, iron citrate or the like is used as the metal salt of an organic acid, this metal salt serves not only as the metal source but also as the carbon source. Therefore, necessity to add the metal source and the carbon source individually is eliminated, so that the metal-carbon composite material can be prepared using a simple and easy method.

It is desirable that an organic acid be used as the carbon source and a metal salt of an inorganic acid be used as the metal source.

When a metal salt of an inorganic acid, for example iron nitrate, nickel nitrate or the like is used as the metal source, raw material costs of the metal-carbon composite material can be reduced because such a material is very inexpensive. A metal-carbon composite material containing a desired metal can be prepared merely by adjusting the ratio of the organic acid and the metal salt.

When a metal salt of an inorganic acid is contained as the metal source, it is desirable that an inorganic acid component of the metal salt be removed in the second step.

When the protic solvent is removed and the inorganic acid component is removed in the second step as described above, the above-described effect is exhibited while the number of steps is not increased. However, it is needless to say that a step of removing the inorganic acid component of the metal salt may be provided apart from the second step.

It is desirable that the organic acid be at least one selected from the group consisting of formic acid, acetic acid, oxalic acid, citric acid, lactic acid, malic acid, tartaric acid, succinic acid and fumaric acid. It is desirable that the inorganic acid be at least one selected from the group of nitric acid, sulfuric acid, hydrochloric acid, perchloric acid, carbonic acid and phosphoric acid.

ADVANTAGES OF THE INVENTION

According to the present invention, such an excellent effect is exhibited that productivity can be improved, there are fewer restrictions in terms of performance, fields to which applications can be made are increased, and a burden on the environment can be reduced.

BRIEF DESCRIPTION OF THE DRAWINGS

[Fig. 1 Fig. 1 is a graph illustrating an X-ray diffraction profile of a present invention material A1.
[Fig. 2] Fig. 2 is a graph illustrating an X-ray diffraction profile of a comparative material Z.
[Fig. 3] Fig. 3 is a photograph illustrating a transmission electron microscope image of the present invention material A1.
[Fig. 4] Fig. 4 is a graph illustrating a thermogravimetric analysis result when a green powder obtained in a process of manufacturing the present invention material A1 (powder after a dry treatment and before a heat treatment) is heated under a nitrogen atmosphere.
[Fig. 5] Fig. 5 is a graph illustrating a thermogravimetric analysis result when a present invention material A3 is heated in the air.
[Fig. 6] Fig. 6 is a graph illustrating a magnetization curve.
[Fig. 7] Fig. 7 is a graph of the enlarged part A of Fig. 6.

BEST MODE FOR CARRYING OUT THE INVENTION

The present invention will be described further in detail below based on Examples, but the present invention is not limited to these Examples.

(Example 1)

Nickel citrate and iron citrate were put into pure water so that the molar ratio of the metals was 1:1, the mixture was stirred so that the metal salts were sufficiently dissolved, and the solution was then heated at 120°C to volatilize (remove) water, thereby obtaining a green powdered metal-carbon composite material precursor. Next, the metal-carbon composite material precursor was heated to 700°C at a rate of 5°C/min in a nitrogen atmosphere, and held at 700°C for 1 hour to be fired (carbonized), thereby obtaining a metal-carbon composite material.
The metal-carbon composite material thus prepared will be hereinafter referred to as a present invention material A1.

(Example 2)

Nickel nitrate and iron citrate were put into pure water so that the molar ratio of the metals was 1:0.29, the mixture was stirred so that the metal salts were sufficiently dissolved, and the solution was then heated at 80°C to volatilize (remove) water and volatilize (remove) nitric acid originating from nickel nitrate, thereby obtaining a green powdered metal-carbon composite material precursor. Next, the metal-carbon composite material precursor was heated to 900°C at a rate of 5°C/min in a nitrogen atmosphere, and held at 900°C for 1 hour to be fired (carbonized), thereby obtaining a metal-carbon composite material.
The metal-carbon composite material thus prepared will be hereinafter referred to as a present invention material A2.

(Example 3)

Nickel acetate and iron citrate were put into pure water so that the molar ratio of the metals was 1:0.29, the mixture was stirred so that the metal salts were sufficiently dissolved, and the solution was then heated at 80°C to volatilize (remove) water and volatilize (remove) nitric acid originating from nickel nitrate, thereby obtaining a green powdered metal-carbon composite material precursor. Next, the metal-carbon composite material precursor was fired (carbonized) under conditions similar to those in Example 2, thereby obtaining a metal-carbon composite material.
The metal-carbon composite material thus prepared will be hereinafter referred to as a present invention material A3.

(Comparative Example)

A powder of iron citrate and a powder of nickel citrate were physically mixed so as to have a molar ratio of 1: 1, the mixed powder was heat-treated for 1 hour in a carbonization furnace set at 700°C under a nitrogen stream, thereby preparing a metal-carbon composite material.
The metal-carbon composite material thus prepared will be hereinafter referred to as a comparative material Z.

(Experiment 1)

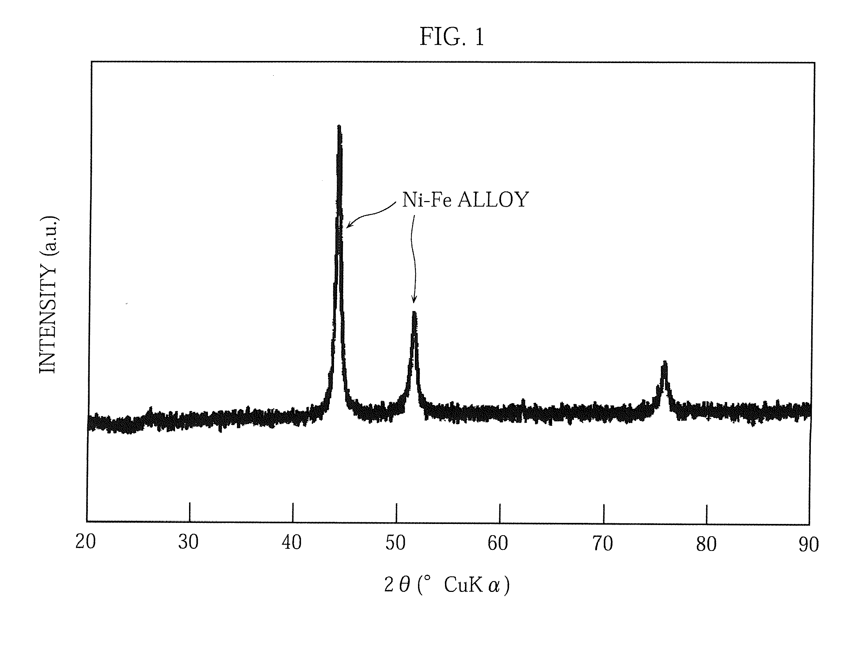

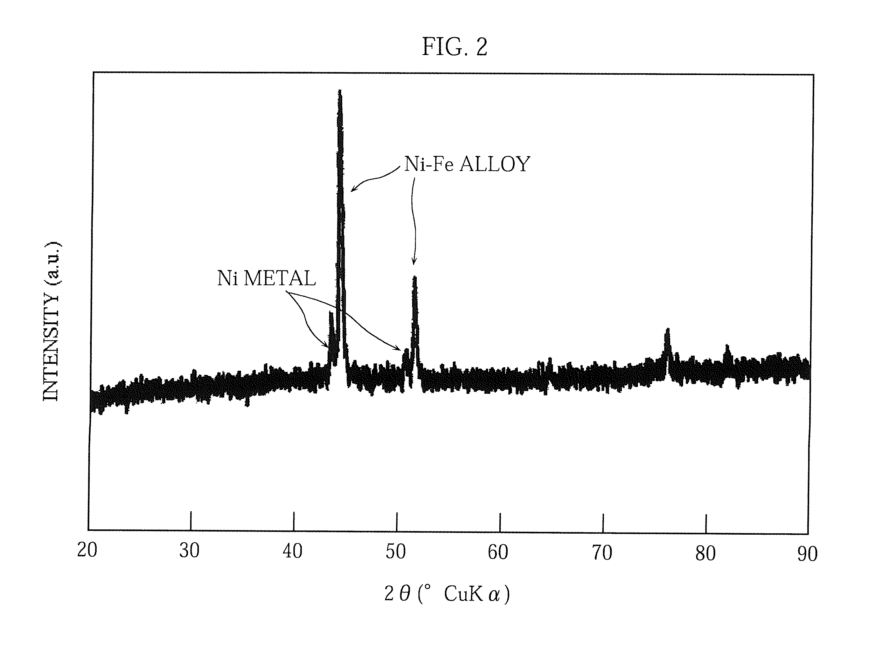

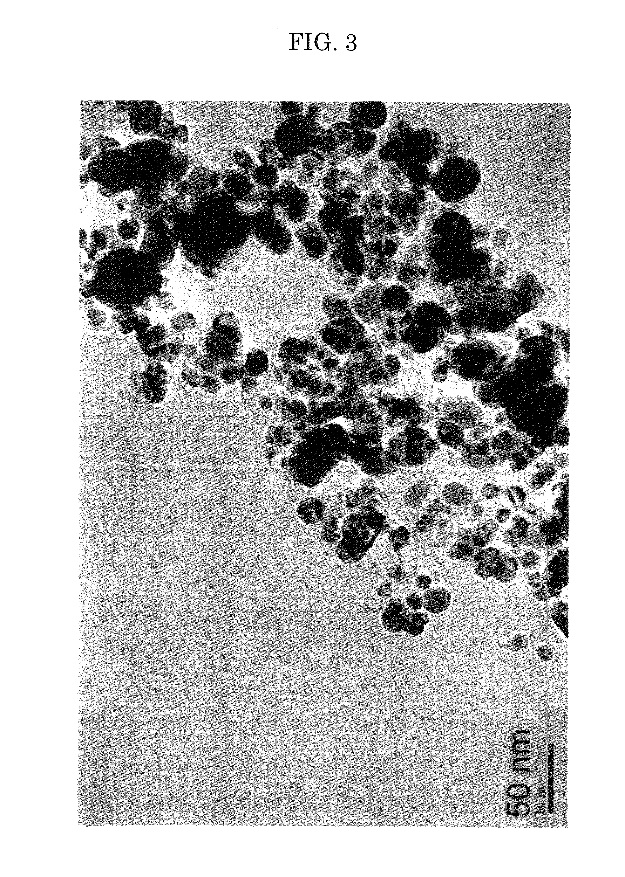

X-ray diffraction was performed for the present invention materials Al to A3 (the X-ray diffraction profile is illustrated only for the present invention material A1) and Comparative Example Z. The results thereof are shown in Fig. 1 (present invention material A1) and Fig. 2 (comparative material Z). For the present invention materials A 1 to A3, a half width of the X-ray diffraction profile was determined, and an average crystallite diameter was calculated from the half width using a Scherrer equation. The results are shown in Table 1. Further, the state of the present invention material A1 was examined using a transmission electron microscope. The photograph thereof is shown in Fig. 3.
As is evident from Fig. 1, metallic particles have a single composition (Ni-Fe alloy in this case) in the present invention material A1. On the other hand, as is evident from Fig. 2, a Ni metal exists in addition to the Ni-Fe alloy in the comparative material Z. From these observations, it is apparent that when an alloy is used as nanoparticles, merely physically mixing and firing two raw materials is not sufficient, and it is absolutely necessary that two raw materials be dissolved in a water solvent, and fired after water is evaporated.
[Table 1]

| Type of material | Metal source | | Carbon source | Firing temperature (°C) | Average particle diameter (nm) | Metal content (% by weight) |
|---|---|---|---|---|---|---|
| | Nickel source | Iron source | | | | |
| Present invention material A1 | Nickel citrate | Iron citrate | Nickel citrate and iron citrate | 700 | 37 | 80 |
| Present invention material A2 | Nickel nitrate | Iron citrate | Iron citrate | 900 | 22 | 80 |
| Present invention material A3 | Nickel acetate | Iron citrate | Iron citrate | 900 | 20 | 80 |

A half width was determined from the X-ray diffraction profile illustrated in Fig. 1, and an average crystallite diameter was calculated from the half width using the Scherrer equation to find that the average crystallite diameter of the present invention material A1 was 37 nm as shown in Table 1, and the standard deviation was 6.5 nm. Further, from the photograph of Fig. 3, fine particles (Ni-Fe alloy particles) having a particle diameter of 5 to 50 nm were observed to be dispersed in a matrix considered as carbon. From these observations, it became clear that the average crystallite diameter derived from the Scherrer equation and the particle diameter determined from the transmission electron microscope image were not contradictory to each other.

A half width was determined from each of the X-ray diffraction profiles of the present invention materials A2 and A3, and an average crystallite diameter from the half width using the Scherrer equation to find that the average crystallite diameters of the present invention materials A2 and A3 were 22 nm and 20 nm, respectively. From this observation, it is apparent that even when a different water-soluble metal salt such as an acetate is used, a metal-carbon composite material similar to the present invention material A1 can be prepared. However, when such a salt is used, the carbon source may become insufficient, and in this case, citric acid, a water-soluble polymer or the like as the carbon source should be added separately when a nickel source or an iron source is dissolved in water.

(Experiment 2)

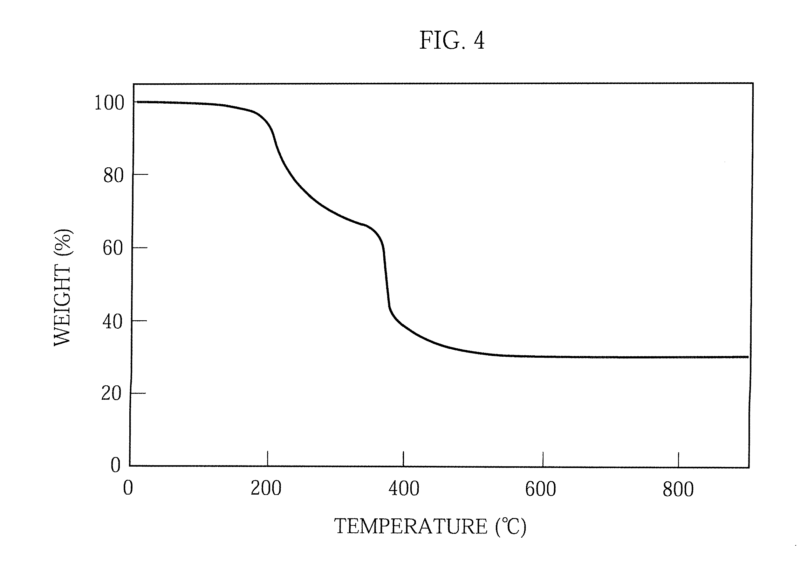

Thermogravimetric analysis was performed by heating under a nitrogen atmosphere the green powder obtained by drying the mixed solution in preparation of the present invention material A1. The results thereof are shown in Fig. 4. As is evident from Fig. 4, the powder is gradually carbonized and decreases its weight as the temperature is elevated. Specifically, the decrease in weight at a fixed rate continues until the temperature reaches about 600°C, which shows that thermal decomposition of organic components contained in the green powder, i.e. generation of carbon, is completed at about 600°C.

(Experiment 3)

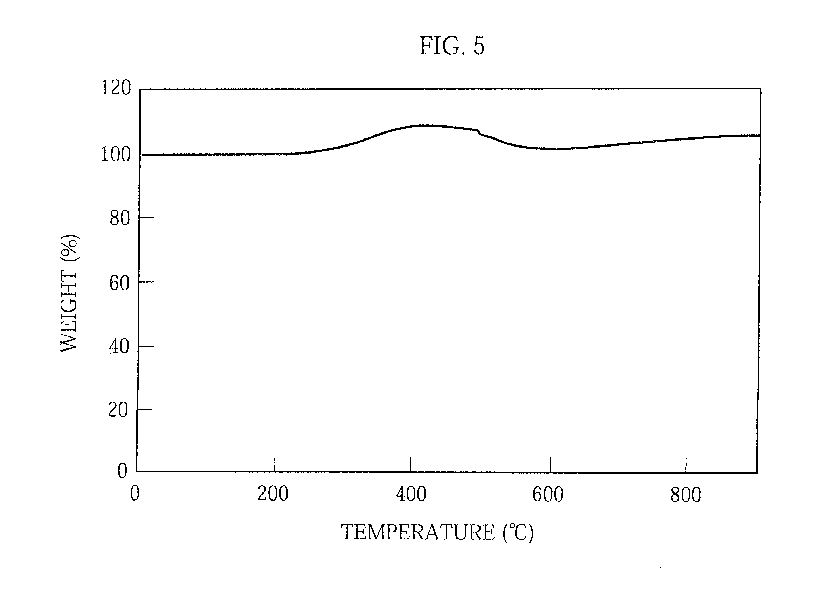

Thermogravimetric analysis was performed by heating the present invention material A3 under the air. The results thereof are shown in Fig. 5.
As is evident from Fig. 5, the present invention material A3 first increases its weight, and decreases its weight at a higher temperature. The former weight increase is a weight increase associated with oxidation of metallic particles, and the latter weight decrease results from burning of carbon. A metal content and a carbon content can be derived from the weight before heating and the weight after heating. Specific procedures are as follows.

When nickel and iron are oxidized, reactions shown in Formulae (1) and (2) proceed.

$$Ni + 1/2O_2 \rightarrow NiO \qquad (1)$$

$$2Fe + 3/2O_2 \rightarrow Fe_2O_3 \qquad (2)$$

Here, in the Ni-Fe alloy, the ratio of nickel is 78.5% by weight and the ratio of iron is 21.5% by weight. Oxidation in the formula (1) causes an increase by 27.3% by weight, and oxidation in the formula (2) causes an increase by 43.0% by weight.

Therefore, the amount of increase resulting from oxidation of the metals is 30.7% by weight as shown in the formula (3).

$$(0.785 \times 0.273) + (0.215 \times 0.43) \approx 0.307 \cdots (3)$$

On the other hand, as is evident from Fig. 5, the amount of increase for the present invention material A3 after burning of carbon (about 900°C) is 6% by weight. Therefore, when X in the following formula (4) (metal concentration in the present invention material A1) is calculated, $X \approx 0.81$ is derived, which shows that the metal concentration is about 81% by weight.

$$1.307X = 1.06 \cdots (4)$$

The value of X is comparable to a value that is predicted from a yield estimated from a change in weight throughout the process, and it is apparent that the sample obtained by the method described in Example 1 is a composite of carbon and metallic nanoparticles which contains metals in a concentration higher than heretofore.

(Experiment 4)

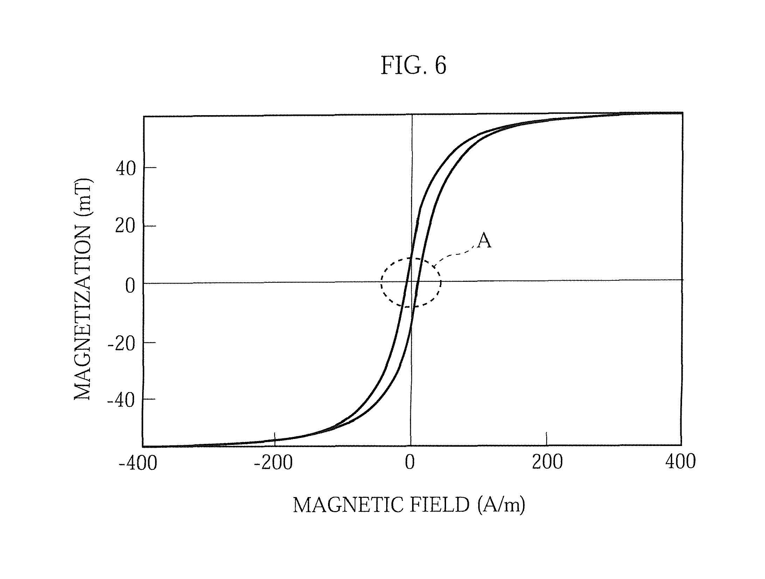

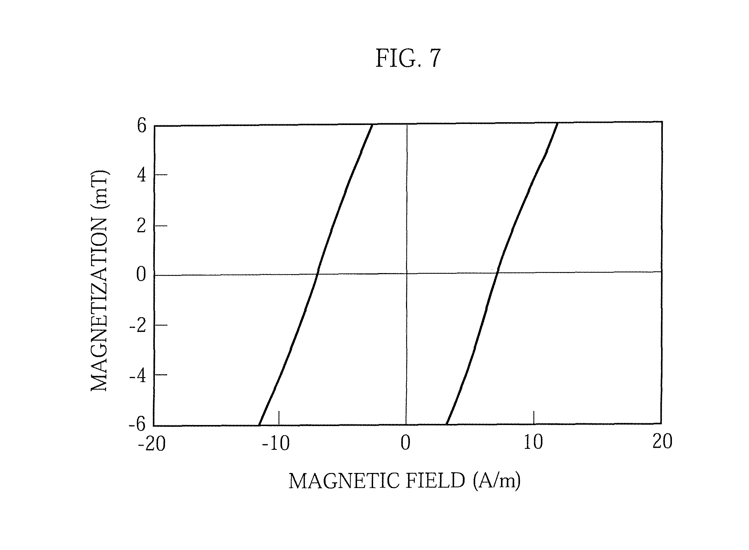

The present invention material A3 was magnetized/demagnetized at room temperature (23°C) by a sample vibration-type magnetometer to obtain magnetization curves. The data thereof are shown in Figs 6 and 7.
As is evident from Figs. 6 and 7, a difference in magnetic field (abscissa direction) between two magnetization curves is smaller than 20 A/m, and therefore it can be understood that the coercive force is kept at 20 A/m or less. Since generally it is often required to keep the coercive force at a low level in electromagnetic wave absorption applications, it is thought the present invention material can be suitably used in electromagnetic wave absorption applications.

(Other Considerations)

The heat treatment is performed at 900°C or lower in Examples described above, and if the heat treatment is performed at a temperature higher than 900°C, the crystallite diameter may be increased. Therefore, it is preferred to perform the heat treatment at 900°C or lower for suppressing an increase in crystallite diameter.

INDUSTRIAL APPLICABILITY

A metal-carbon composite material of the present invention and a method for manufacturing the same can be used in the fields of catalysts, magnetic fluid bearings, electromagnetic wave absorbers, magnetic recording materials, magnetic separation carriers, micro-contacts and the like.

**Claims**

1.   A metal-carbon composite material comprising: carbon; and nanoparticles formed of a metal and/or a metal oxide, wherein the ratio of the nanoparticles is 50% by weight or more and 99% by weight or less based on the total amount of the carbon and the nanoparticles.

2.   The metal-carbon composite material according to claim 1, wherein the nanoparticles are dispersed in the carbon.

3.   The metal-carbon composite material according to claim 1 or 2, wherein the average particle diameter of the nanoparticles is 1 nm or more and less than 100 nm.

4.   The metal-carbon composite material according to claim 3, wherein the standard deviation of the particle diameters of the nanoparticles is not more than 1/3 of the average particle diameter of the nanoparticles.

5.   The metal-carbon composite material according to any one of claims 1 to 4, wherein the nanoparticles are formed of an alloy.

6.   The metal-carbon composite material according to claim 5, wherein the alloy includes at least two metals selected from the group consisting of iron, nickel, manganese, cobalt, chromium, copper, vanadium, molybdenum, silicon, aluminum, zinc, tin, tungsten, gold, silver and platinum.

7. The metal-carbon composite material according to any one of claims 1 to 6, wherein the coercive force is 20 A/m or less.

8. A method for manufacturing a metal-carbon composite material, the method comprising:

a first step of dissolving a metal source and a carbon source in a protic solvent;
a second step of removing the protic solvent; and
a third step of performing firing under a reducing atmosphere or an inert atmosphere.

9. The method for manufacturing a metal-carbon composite material according to claim 8, wherein the metal source includes a plurality of different metals.

10. The method for manufacturing a metal-carbon composite material according to claim 8 or 9, wherein a metal salt of an organic acid is used as the metal source and carbon source.

11. The method for manufacturing a metal-carbon composite material according to claim 8 or 9, wherein an organic acid is used as the carbon source and a metal salt of an inorganic acid is used as the metal source.

12. The method for manufacturing a metal-carbon composite material according to claim 11, wherein an inorganic acid component of the metal salt is removed in the second step.

13. The method for manufacturing a metal-carbon composite material according to claim 11 or 12, wherein the organic acid is at least one selected from the group consisting of formic acid, acetic acid, oxalic acid, citric acid, lactic acid, malic acid, tartaric acid, succinic acid and fumaric acid.

14. The method for manufacturing a metal-carbon composite material according to any one of claims 11 to 13, wherein the inorganic acid is at least one selected from the group of nitric acid, sulfuric acid, hydrochloric acid, perchloric acid, phosphoric acid and carbonic acid.

FIG. 1

EP 2 679 539 A1

## FIG. 2

FIG. 3

FIG. 4

EP 2 679 539 A1

FIG. 5

EP 2 679 539 A1

FIG. 6

EP 2 679 539 A1

FIG. 7

## INTERNATIONAL SEARCH REPORT

| | International application No. |
|---|---|
| | PCT/JP2012/054043 |

**A. CLASSIFICATION OF SUBJECT MATTER**
*C01B31/02*(2006.01)i, *B82Y30/00*(2011.01)i, *B82Y40/00*(2011.01)i

According to International Patent Classification (IPC) or to both national classification and IPC

**B. FIELDS SEARCHED**

Minimum documentation searched (classification system followed by classification symbols)
C01B31/02, B82Y30/00, B82Y40/00

Documentation searched other than minimum documentation to the extent that such documents are included in the fields searched
Jitsuyo Shinan Koho        1922–1996    Jitsuyo Shinan Toroku Koho    1996–2012
Kokai Jitsuyo Shinan Koho  1971–2012    Toroku Jitsuyo Shinan Koho    1994–2012

Electronic data base consulted during the international search (name of data base and, where practicable, search terms used)
JSTPlus/JMEDPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2006-202759 A  (Samsung SDI Co., Ltd.),<br>03 August 2006 (03.08.2006),<br>claims; example 1; paragraph [0060]<br>& US 2006/0165995 A1     & EP 1683759 A1<br>& KR 10-2006-0085163 A  & CN 1817894 A | 1-10<br>11-14 |
| X<br>A | JP 2004-174414 A  (Kawatetsu Mining Co., Ltd.),<br>24 June 2004 (24.06.2004),<br>claims; tables 1, 2<br>(Family: none) | 1-3,5,7<br>4,6,8-14 |
| X<br>A | JP 2010-277989 A  (Denso Corp.),<br>09 December 2010 (09.12.2010),<br>examples 11, 12; table 2<br>& US 2010/0316907 A1     & CN 101877406 A<br>& KR 10-2010-0118520 A | 1,3,5,6<br>2,4,7-14 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 April, 2012 (23.04.12) | 15 May, 2012 (15.05.12) |

| Name and mailing address of the ISA/<br>    Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/054043

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | Makoto NAKANISHI et al., "Preparation of carbon/Fe-Ni-Cu alloy composite by polymerized complex method and characterization of their structure and electromagnetic wave absorption", Carbons, 15 June 2007 (15.06.2007), no.228, pages 158 to 162 | 8-14<br>1-7 |
| X<br>A | JP 06-040771 A  (Koa Oil Co., Ltd.),<br>15 February 1994 (15.02.1994),<br>example 1; table 1<br>(Family: none) | 8<br>1-7,9-14 |

Form PCT/ISA/210 (continuation of second sheet) (July 2009)

**INTERNATIONAL SEARCH REPORT**

| International application No. |
|---|
| PCT/JP2012/054043 |

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 679 539 A1**

| INTERNATIONAL SEARCH REPORT | International application No. |
|---|---|
| | PCT/JP2012/054043 |

Continuation of Box No.III of continuation of first sheet(2)

The following documents 1-3, which are cited in this international search report, disclose metal-carbon composite material defined in claim 1, the invention of claim 1 cannot be considered to be novel in the light of the inventions disclosed in documents 1 to 3 and does not have a special technical feature.
As a result of judging special technical features with respect to claims dependent on claim 1, the inventions of claims 1 - 7 are classified into main invention and the inventions in other claims are classified into different inventions.
document 1: JP 2006-202759 A (Samsung SDI Co., Ltd.), 03 August 2006 (03.08.2006),
& US 2006/0165995 A1 & EP 1683759 A1 & KR 10-2006-0085163 A & CN 1817894 A
document 2: JP 2004-174414 A (Kawatetsu Mining Co., Ltd.), 24 June 2004 (24.06.2004), (Family: none)
document 3: JP 2010-277989 A (Denso Corp.), 09 December 2010 (09.12.2010), & US 2010/0316907 A1 & CN 101877406 A & KR 10-2010-0118520 A

Form PCT/ISA/210 (extra sheet) (July 2009)

**EP 2 679 539 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Preparation of Carbon/Fe-Co Alloy Composite Material Applying Complex Polymerization Method and Magnetic Properties. *J. Jpn. Soc. Powder Powder Metallurgy,* vol. 52 (8
- Preparation of Carbon/Fe-Ni-Cu Alloy Composite by Polymerized Complex Method and Characterization of their Structure and Electromagnetic Wave Absorption. *Carbon No. 228*
- Microwave absorption properties of the carbon-coated nickel nanocapsules. *Appl. Phys. Lett.,* 2006, vol. 89, 053115
- Microstructure and microwave absorption properties of the carbon-coated Iron nanocapsules. *J. Phys. D: Appl. Phys.,* 2007, vol. 40, 5383-5387